Europäisches Patentamt

European Patent Office

Office européen des brevets

(19)

(11) **EP 0 477 888 B1**

(12) **EUROPEAN PATENT SPECIFICATION**

(45) Date of publication and mention
of the grant of the patent:
**13.03.1996 Bulletin 1996/11**

(51) Int Cl.[6]: **G01S 17/87**

(21) Application number: **91116306.1**

(22) Date of filing: **25.09.1991**

(54) **System for the detection of the position and orientation of an object in space**

System zur Feststellung der Position und Lage eines Objektes im Raum

Système pour détecter la position et l'orientation d'un objet dans l'espace

(84) Designated Contracting States:
**DE FR GB**

(30) Priority: **28.09.1990 US 589714**

(43) Date of publication of application:
**01.04.1992 Bulletin 1992/14**

(73) Proprietor: **HONEYWELL INC.**
**Minneapolis Minnesota 55408 (US)**

(72) Inventors:
• **Mocker, Hans W.**
**Minneapolis, Minnesota 55405 (US)**

• **Overland, John E.**
**Plymouth, Minnesota 55447 (US)**

(74) Representative: **Herzbach, Dieter, Dipl.-Ing. et al**
**Honeywell Holding AG**
**Patent- und Lizenzabteilung**
**Postfach 10 08 65**
**D-63008 Offenbach (DE)**

(56) References cited:
EP-A- 0 235 034          DE-C- 3 601 536
FR-A- 2 433 760          US-A- 3 443 872

• IEEE/AIAA 7TH DIGITAL AVIONICS SYSTEMS
CONFERENCE 13 October 1986, FORT WORTH,
TEXAS, US, pages 113 - 123; W.S. OTAGURO
ET AL.: 'Single-target module orientation
sensor for space operations'

**Description**

Field of the Invention

The invention relates to a system for detection of the position and orientation of an object in space according to the preamble of claim 1 as it is known from FR-A-24 33 760. Particularly, the invention relates to a system for monitoring the position and orientation of a pilot's helmet within the cockpit of high performance tactical helicopters. More particularly, the invention relates to a helmet mounted sight.

From EP-AI-0 235 034 an optical distance measuring system is known which makes use of a frequency scanned laser diode whereby reflected light from a target is fed back to the laser cavity and a detector behind the laser derives a beat signal which is analyzed to determine the target range.

Background of the Invention

A variety of helmet monitoring systems exists in the art. Some electro-optic devices use rotating mirrors and a conventional light source, depending upon the number of observable helmet mounted sensors.

These devices may be used in roll or non-roll applications. Without roll information the use of the helmet monitoring system is limited to the low G helicopter environment where the pilot can keep his head upright. Accuracy is limited by spot size of the light and the linearity of rotating scan mirrors. Reliability is limited by mechanically moving parts such as the rotating mirrors.

Some magnetic devices exist in the art. For instance, the magnetic helmet sight provides complete X, Y, Z, pitch, roll and yaw (6-axis) information.

Its accuracy is limited by cockpit metal induced distortions of magnetic fields. Since helmet mounted metal is difficult to compensate for, accuracy is significantly reduced in an integrated magnetic helmet sight or display system.

The related art pertaining to helmet sights have light sources located on the helmet and detector configurations (i.e., spatially extended array) mounted in the cockpit. Thus, the employed sources on the helmet must be powered via cables and connectors from the cockpit. These approaches restrict the maneuverability of the pilot and add additional weight to the helmet which is a disadvantage in a high-g maneuver. In addition, logistics problems do exist if the pilot's helmet after mounting needs to be connected by special personnel.

Therefore, it is the primary object of the present invention to devise a system which allows the accurate detection of the position and orientation of an object in space without any active means at the object.

This object is achieved by the characterizing features of the independent claim. Advantageous embodiments may be taken from the dependent claims.

In the present invention neither the light source (semiconductor laser) nor the detector are mounted to the helmet but are both mounted in the cockpit. Only passive means such as engraved grooves or corner cubes are located at the helmet. This results in the significant advantages over the related art. There is no increase in helmet weight which is important for high-g maneuvers (8-10g) of modern fighter aircraft. The use of near-infrared laser sources (i.e., InGaAsP laser at 1.54 microns) results in complete eye-safety for the pilot and no light emergence from the cockpit. Sources and detectors can be co-located (i.e., common transmit-receive optics) resulting in a minimum of mounts in the cockpit.

Summary of the Invention

The invention incorporates a groove or grooves or small corner cubes mounted on a helmet in a particular configuration upon which a laser diode or other light source mounted in the cockpit illuminates the corner cubes or grooves. A small amount of light is returned to the light source or laser and affects the level of oscillation in the laser. A small output of the light is coupled to a detector and preamplifier and measured with a spectrum analyzer. A small modulation of the intensity of the light at the beat frequency is observed which is proportional to a range. If the helmet has a velocity then an additional doppler-shifted signal may be obtained that can be isolated from the range-related frequency shift.

Features of the laser cavity helmet mounted sight include the requirement of only one compound lens, having a self-aligning technique, a requirement of only a low frequency modulation of the light source, not requiring a high quality reflector on the helmet, processing at acoustic frequencies using present processors, and, depending on the configuration, requiring only one light source.

Brief Description of the Drawings

Figure 1       reveals an embodiment of the invention.
Figure 2       is a graph of diode injection current change versus frequency change.
Figure 3       is a graph of beat frequency versus velocity and range.

Figure 4          illustrates individual staring transmitter/receiver modules.
Figure 5          shows multiple transmit/receive modules sharing one optical element.
Figures 6a-6c     indicate the effect of helmet motion on the laser beat frequency.
Figure 7          is a graph of laser frequency response versus modulation frequency.
Figure 8          is a drawing of an external cavity InGaAsP laser.
Figure 9          sets forth the basic relationship between the passive external cavity and the active internal cavity.

Description of the Preferred Embodiments

The principle of operation of the external cavity laser for the present helmet mounted sight utilizes a laser diode scheme that is used for position sensing which is the external cavity laser with weak feedback from the target. US-A-4,919,532 shows such an external cavity laser. The present invention, having the external cavity laser, the laser diode is used as a frequency scannable source and as an optical phase discriminator. Dependent on the phase of the return signal, the diode laser either increases or decreases its level of oscillation, depending on the return signal being in phase or out of phase with the intrinsic signal. For distance measurements, the diode laser is current modulated to make use of the frequency chirp (1/sec2) of semiconductor lasers. If the level of oscillation is monitored through the back mirror of the diode with a detector, a beat frequency is observed which is proportional to range. If the helmet has a velocity, an additional doppler-shifted signal is obtained that can be isolated from the range-related frequency shift. A three mirror laser external cavity has been used for laser frequency stabilization where a line width of 40 kilohertz has been achieved which is four orders of magnitude of improvement over the solitary diode.

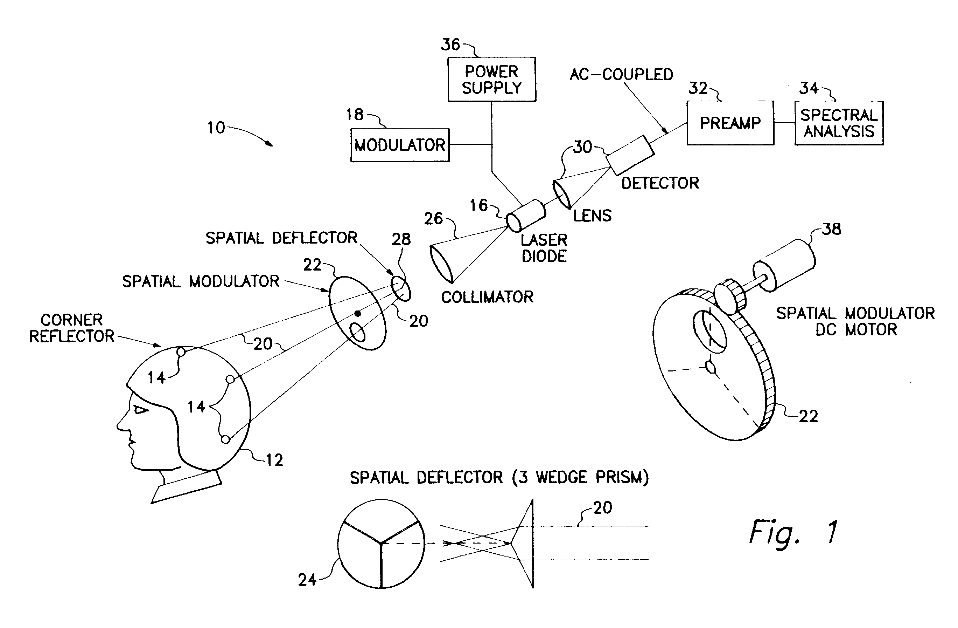

One embodiment of the present invention utilizing an external cavity laser is shown in figure 1. A laser diode 16 emits light 20 which is projected towards the pilot's helmet 12. Several optics configurations may be used in embodiment 10. One configuration is referred to the flood light approach which uses the natural (20o x 30o) output of diode 16 and illuminates all three corner cubes 14 with light 20. In this approach, either corner cubes 14 are themselves modulated or beam 20 is spatially modulated by spatial modulator 22. Another configuration utilizes a moderate beam spread of light 20, provided by collimator 26 and spatial deflector 28, that uses a three wedge prism 24 to form three beams each of which illuminates one corner cube or reflector 14, respectively. Corner cubes 14 reflect back light 20 onto laser diode 16 which in turn reflects remaining light 20 onto photodetector 30. Photodetector 30 converts reflective light 20 into electrical signals which are AC-coupled to preamplifier 32. Output of preamplifier 32 goes to spectral analyzer 34 for range and/or velocity determination of helmet 12. Modulator 18 and power supply 36 effectively provide modulated power to laser diode 16. Spatial modulator 22 is driven by motor 38.

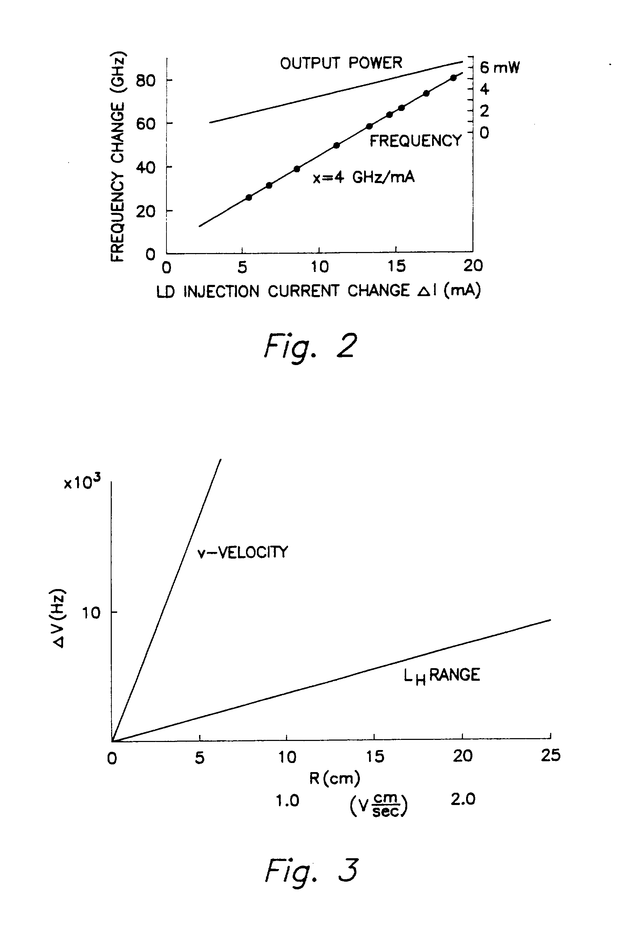

A small amount of the laser light 20 intensity returned into the laser cavity, affects the level of oscillation in diode 20. If laser diode 16 is chirped in frequency by modulating the excitation (as graphed in figure 2, which shows measured dependence of laser diode frequency on injection current) a frequency shift of the outgoing beam is obtained in the time-of-flight t = 2L/c it takes for light emitted to reach the target and be backscattered into laser 20 where the mixing takes place. While modulating the diode 16 current, the laser's free running frequency is tuned and a mode hop occurs at intervals equal to consecutive external cavity modes c/2LH where LH is the distance between laser 20 and corner cube 14 on helmet 12. The result is an amplitude modulation at the beat frequency which is given by the equation:

$$\nu_B = \tau \cdot \frac{d\nu}{dt} = \frac{2L_H}{c} \cdot \frac{d\nu}{dt}$$

where $\frac{d\nu}{dt}$ is the chirp rate of the laser.

The small amount of the laser light 20 coupled (through a back mirror) to a detector 30 and preamplifier 32 is measured with a spectrum analyzer 34. A small modulation (i.e., 0.1% in amplitude) of the laser's intensity at the beat frequency is observed with analyzer 34.

An evaluation of the beat frequency to be expected for a given target range and velocity is noted:

$$\text{Beat frequency } \nu_B = \frac{2v}{\lambda} + \frac{2L_H}{c} \cdot \frac{d\nu}{dt}$$

where v = target velocity, $\lambda$ = laser wavelength, $L_H$ = range to helmet, and $\frac{d\nu}{dt}$ = chirp rate of laser diode.

For an application of the above formula utilizing practical values, take a Sharp diode LT 015 MDO having $\frac{d\nu}{dt}$ = 2.6 x $10^9$ Hz/mA o-to-p. For v = 0 the case of ranging only is

$$\nu_B = \frac{2L_H}{c} \cdot \frac{dv}{dt} = K_1 \, L_H$$

for a lkHz modulated frequency, $K_1 = 3.46 \times 10^2 \, \frac{1}{cmsec}$ for $L_H = 20$ cm and $\nu_B = 6.92 \times 10^3$ Hz. For $\frac{dv}{dt} = 0$ (no chirp) the case of velocity only is $\nu_B = \frac{2v}{\lambda_o} = K_2 v$. For $\lambda_0 = 0.83 \times 10^{-4}$cm., $K_2 \, 2.4 \times 10^4 \frac{1}{cm}$ and for v = 1 cm/sec., $\nu_B = 2.4 \times 10^4$ Hz. The dependence of $\nu_B$ on range and velocity is shown in figure 3. Figure 3 shows beat frequency versus velocity v and range $L_H$ for an external cavity head sensor.

There are several optical scanning configurations. In order to have one external cavity laser determine the range to 2 or 3 corner reflectors, two embodiments are feasible. Embodiment 10 is spatial modulation wherein spatial modulator 22 couples one corner reflector 14 to the cavity at a point in time, with time-shared operation for the other corner cubes 14. Spatial modulators 22 can be a rotating disk with an off-axis hole or a rotating wedge prism 24. Both of these devices require motor drive 38 and a limited resolution pick-off providing sector information.

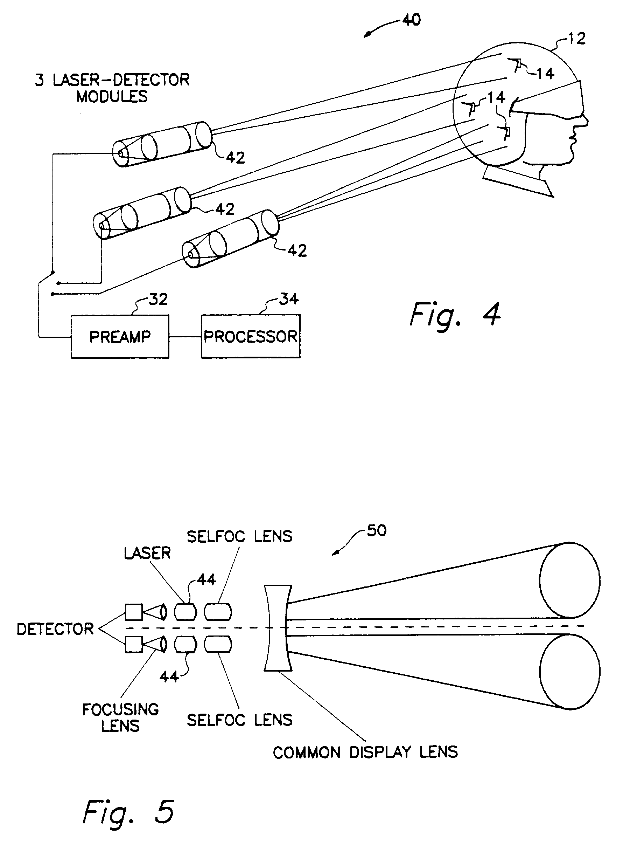

Embodiment 40 is a multiple diode approach wherein, instead of Scanning the corner reflector, two or three laser diodes 42 are arranged in one optical system such that each corner cube 14 within its motion box is illuminated all the time by one diode 16, yielding one range measurement all the time (in figure 4). Figure 4 reveals individual staring transmitter/receiver modules. Or, two or three laser detector modules 44 can be mounted on one chip using one optical system 50, while the electronics can be shared using a switching network (in figure 5). Figure 5 shows multiple transmit/receive modules sharing one optical element.

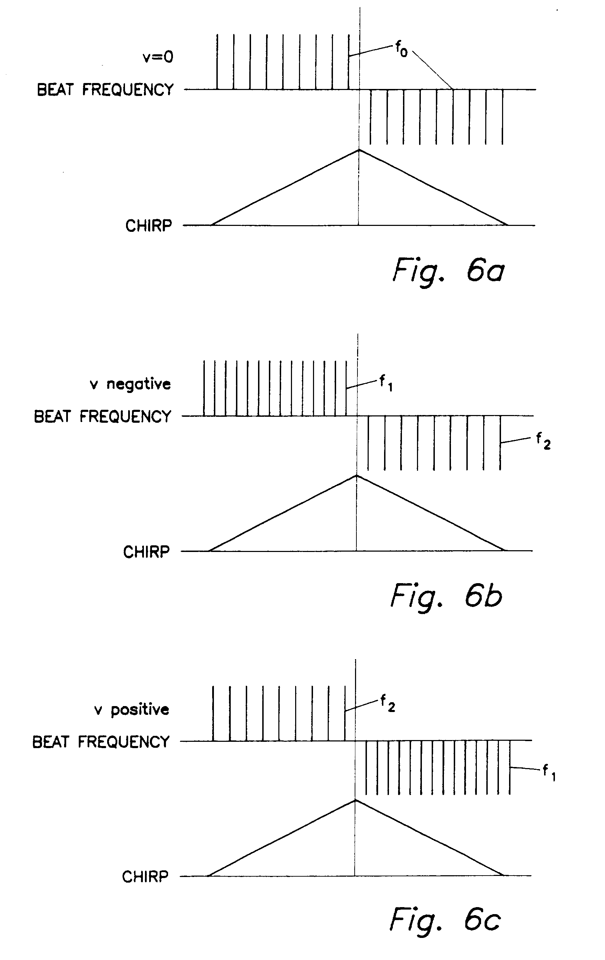

Range measurement may be had without sensitivity to velocity. As the beat frequency equation shows, the beat frequency obtained is proportional to range but also contains a term due to velocity. Figures 6a-6c indicate the influence of helmet motion on beat frequency. Note that $f_o = \frac{f_1 + f_2}{2}$ independent of velocity. If a symmetric ramp is used for up- and down-chirping the laser frequency (as shown in figures 6a-6c) for the case of no velocity, a beat frequency is obtained which for the up-chirp cycle is identical to the beat frequency for the down-chirp cycle (in figure 6a). If, however, a negative velocity arises (in figure 6b) (velocity vector opposite the positive sensing direction), the beat frequency for the up-chirp cycle increases while the beat frequency for the down-chirp cycle decreases. If a positive velocity is encountered (velocity vector in positive sensing direction), the beat frequency for the up-chirp cycle is reduced, while the beat frequency for the down-chirp cycle is increased (in figure 6c). Thus, a velocity independent beat signal is obtained by forming $v = \frac{v_{up} + v_{down}}{2}$. Further, the beat frequency which is only due to range and independent of velocity can be derived by keeping $\frac{dv}{dt} = $ constant. Then one has

$$\frac{dL_H}{dt} = \frac{c}{2} \frac{\left(\frac{d\nu_B}{dt}\right)}{\left(\frac{d\nu}{dt}\right)} \quad or \quad \Delta L_H = \frac{c}{2} \frac{(\Delta \nu_B)}{\left(\frac{d\nu}{dt}\right)}$$

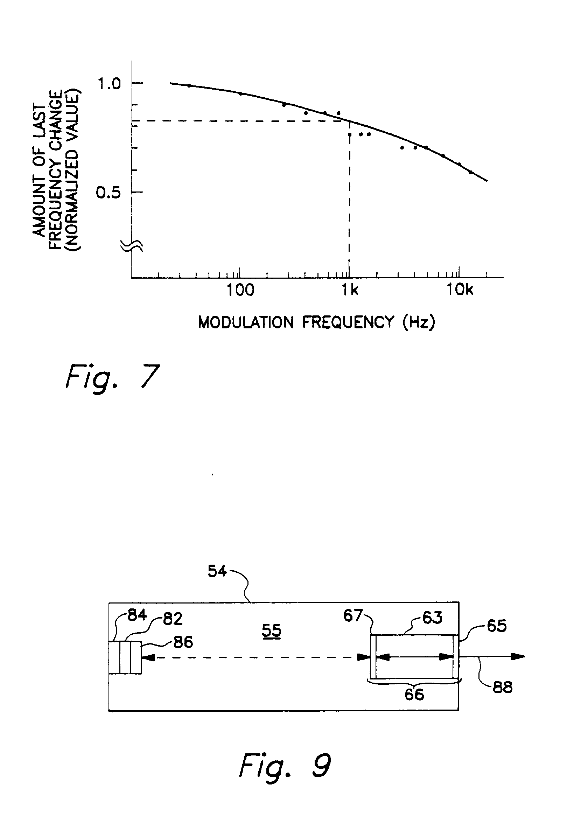

For instance, for a Hitachi diode the frequency shift is 4 GHz/mA (in figure 2). If the modulation frequency is 1 kHz, this number is to be multiplied by 0.83 (in figure 7). Figure 7 is graphing of frequency response of laser frequency tuning measured as a function of modulation frequency of the diode current. Thus, the chirp rate can be obtained.

$$\frac{dv}{dt} = \frac{4 \, GHz \times 0.83}{mA} \times \frac{1mA}{10^{-3} sec} = 3.3 \times 10^{12} \frac{1}{sec^2},$$

$L_H = 20$ cm and

$\nu_B = \frac{2 \times 20}{3 \times 10^{10}} \times 3.3 \times 10^{12} = 4.4 \times 10^3$Hz. A frequency measurement accuracy of 1 part in $10^4 = 0.44$ Hz can be achieved in a straightforward manner. The equivalent range accuracy is $\Delta L_H = \frac{3 \times 10^{10}}{2} \times \frac{0.44}{3.3 \times 10^{12}} = 0.02$ mm. The influence of

changes in $\frac{dv}{dt}$ are to the first order not directly contributing to the range error since $\Delta f$ is directly proportional to $\frac{dv}{dt}$ and

since in the error equation the ratio of the two enters into the equation (neglecting again $\frac{d^2v}{dt^2}$ as small). Thus, the achievable ranging accuracy is sufficient for helmet sight measurements and can be achieved with state-of the-art components.

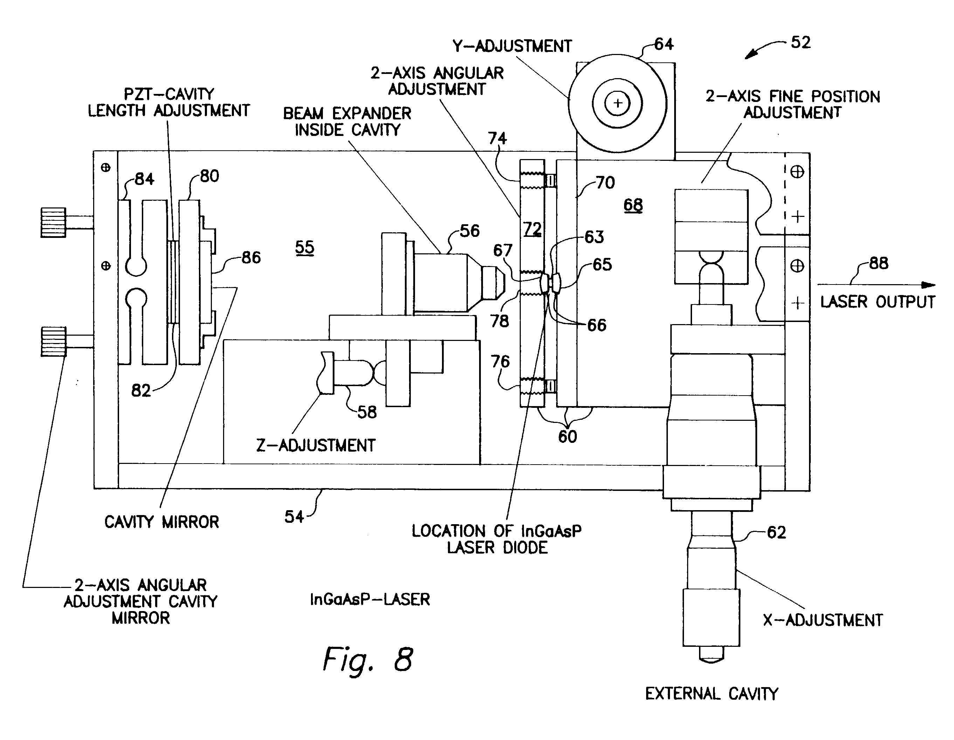

The system 10 or 40 laser or lasers may be a miniaturized, external cavity InGaAsp laser 52 (in figure 8) that produces a 1.54 micrometer (μm) wavelength light beam. Laser 52 is frequency stable with a line width of 40 kilohertz (kHz). Laser 52 is a continuous wave device. The line width of laser 52 is an improvement of about four orders of magnitude over the line width of a corresponding solitary laser diode. In figure 8, external cavity laser 52 has a stable cavity 54 constructed of invar for thermal stability and acoustic isolation. Cavity 54 holds in a concentric fashion an optical beam expander 56 which has a fine adjustment 58 for the Z position. The front end of cavity 54 houses two-axis adjustment 60 having a two-axis trapezoidal fine position adjustment, and X-adjustment 62 and a Y-adjustment 64, for InGaAsP diode chip 66. InGaAsP chip 66 is mounted so as to receive cooling from Peltier electric cooler 70 mounted on block 66. Invar slab 72 is mounted so as to have two-axis angular adjustments 74 and 76. Also center threaded holder 78 provides for fine adjustment of diode 66 in the Z axis.

Rear reflector-grating or mirror holder 80 is mounted on piezoelectric transducer (PZT) element 82. Holder 80 holds cavity mirror 86 in cavity 52. PZT element 82 provides a one-time phase adjustment for the phase of the optical wave of the external feedback cavity to be "in-phase" with the optical wave in the solitary diode. PZT element 82 is mounted on two-axis angular adjustment element 84 which in turn is end-mounted in invar cavity 52.

Chip 66, in figure 9, functions as an active internal cavity 63 for the laser light. The typical length of the internal cavity 63 is about .02 centimeter. Laser light is emitted from the laser diode through a partially reflective coating 67 situated at one end of the solitary diode. The emitted laser light goes through space 55 of passive external cavity 54 of about 10 centimeters in length, to a fully reflective cavity mirror 86. The laser light is reflected back through mirror 67 into laser diode 63. The laser light reflected back into cavity 63 is of a very stable frequency and is in phase with the laser light of internal cavity 63. The laser light coming from space 55 of cavity 54 provides wave reinforcement or constructive interference amounting to strong feedback of resonant external cavity space 55 to the oscillation frequency of laser diode 63. From diode 63 through partially (i.e., about 40%) reflecting mirror 65 exits narrow line width laser 88. Mirror 67 is partially reflective so as to reflect some of the laser back within the respective cavities 54 and 63. Mirror 65 is similarly partially reflective so as to reflect some of the laser light back within diode 63.

In lieu of external cavity InGaAsP laser 52, a diode-pumpted Nd:YAG laser which is well known in the art may be utilized.

Invention can be developed into a sensor requiring no moving parts and thus having a high reliability. The need for laser diode modulation and the processing techniques are state-of-the-art. The flood light embodiment 10 can be used if corner reflectors 14 are modulated at low frequencies. Recently ferro-electric liquid crystals have become available that have a transmission range from 400-1500 nm and would be suitable for this application.

## Claims

1. System for detection of the position and the orientation of an object in space, in particular of a helmet mounted sight, comprising:

   a laser light source (16);
   a plurality of corner reflectors (14) situated on said object (12) for reflecting a light beam emitted by said laser light source;
   a detector (30) for receiving the reflected light beam; and
   an analyzer for processing the detected signal,
   **characterized in that**
   modulating means (18) are connected to the laser light source (16) for modulating the frequency of a light beam emitted by said source;
   said laser light source is a diode laser (16) acting as a frequency scannable source and increasing or decreasing its level of oscillation depending on the return signal being in phase or out of phase with the intrinsic signal;
   said detector (30) serves to detect an associated beat frequency; and
   said analyzer (34) analyzing said beat frequency for detecting a position of said object.

2. System according to claim 1, **characterized by** the use of a single laser light source (16) and a spatial modulator (22) for modulating a light beam from said single laser light source (16).

3. System according to claim 2, further **characterized by** a spatial deflector (28) situated between said laser light source (16) and said spatial modulator (22) for deflecting the light beam onto said plurality of corner reflectors (14).

4. System according to claim 1, **characterized by** the use of more than one laser light source (42, 44).

5. System according to claim 4, **characterized by** said more than one laser light source (42) is sharing one electronics and one optical element.

**Patentansprüche**

1. System zur Feststellung der Position und Ausrichtung eines Objektes im Raum, insbesondere eines helmgelagerten Visiers, umfassend:

   eine Laser-Lichtquelle (16);
   mehrere Eckenreflektoren (14) an dem Objekt (12) zur Reflektion eines Lichtstrahles, der durch die Laser-Lichtquelle emittiert wird;
   einen Detektor (30) für den Empfang des reflektierten Lichtstrahles; und
   einen Analysator zur Verarbeitung des detektierten Signales;
   **dadurch gekennzeichnet**,daß
   eine Modulationseinrichtung (18) mit der Laser-Lichtquelle (16) verbunden ist, zur Modulation der Frequenz des durch die Quelle emittierten Lichtstrahles;
   daß die Laser-Lichtquelle ein Diodenlaser (16) ist, der als eine in seiner Frequenz abfragbare Quelle arbeitet und seinen Oszillationspegel erhöht oder vermindert in Abhängigkeit davon, ob das Rückkehrsignal in Phase oder außer Phase mit dem Ursprungssignal ist;
   daß der Detektor (30) zur Feststellung einer zugeordneten Schwebungsfrequenz dient; und
   daß der Analysator (34) die Schwebungsfrequenz analysiert, um eine Position des Objektes festzustellen.

2. System nach Anspruch 1, **gekennzeichnet durch** die Verwendung einer Einzel-Laser-Lichtquelle (16) und eines Ortsfkequenzmodulators (22) für die Modulation eines Lichtstrahles von der Einzel-Laser-Lichtquelle (16).

3. System nach Anspruch 2, ferner **gekennzeichnet durch** einen Ortsfrequenzdeflektor (28), der zwischen der Laser-Lichtquelle (16) und dem Ortsfkequenzmodulator (22) angeordnet ist, um den Lichtstrahl auf die mehreren Eckenreflektoren (14) abzulenken.

4. System nach Anspruch 1, **gekennzeichnet durch** die Verwendung von mehr als einer Laser-Lichtquelle (42, 44).

5. System nach Anspruch 4, **gekennzeichnet dadurch**, daß die mehr als eine Laser-Lichtquelle (42) gemeinsam eine Elektronik und ein optisches Element benutzt.

**Revendications**

1. Système de détection de la position et de l'orientation d'un objet dans l'espace, en particulier d'un viseur monté sur un casque, comportant :

   une source de lumière laser (16);
   plusieurs réflecteurs de coin (14) situés sur ledit objet (12) afin de réfléchir un faisceau de lumière émis par ladite source de lumière laser;
   un détecteur (30) destiné à recevoir le faisceau de lumière réfléchi; et
   un analyseur destiné à traiter le signal détecté,
   caractérisé en ce que
   des moyens de modulation (18) sont reliés à la source de lumière laser (16) afin de moduler la fréquence d'un faisceau de lumière émis par ladite source;
   ladite source de lumière laser est une diode laser (16) servant de source à balayage de fréquence et augmentant ou diminuant son niveau d'oscillation en fonction du signal en retour qui est en phase ou en décalage de phase avec le signal intrinsèque;
   ledit détecteur (30) sert à détecter une fréquence de battement associée; et

ledit analyseur (34) analyse ladite fréquence de battement afin de détecter une position dudit objet.

2. Système selon la revendication 1, caractérisé par l'utilisation d'une unique source de lumière laser (16) et d'un modulateur spatial (22) destiné à moduler un faisceau de lumière provenant de ladite unique source de lumière laser (16).

3. Système selon la revendication 2, caractérisé en outre par un déflecteur spatial (28) situé entre ladite source de lumière laser (16) et ledit modulateur spatial (22) afin de dévier le faisceau de lumière sur lesdits réflecteurs de coin (14).

4. Système selon la revendication 1, caractérisé par l'utilisation de plusieurs sources de lumière laser (42, 44).

5. Système selon la revendication 4, caractérisé en ce que lesdites plusieurs sources de lumière laser (42) partagent une électronique et un élément optique.

Fig. 1

SPATIAL DEFLECTOR (3 WEDGE PRISM)

EP 0 477 888 B1

*Fig. 2*

*Fig. 3*

*Fig. 4*

*Fig. 5*

v=0

BEAT FREQUENCY

$f_0$

CHIRP

Fig. 6a

v negative

BEAT FREQUENCY

$f_1$

$f_2$

CHIRP

Fig. 6b

v positive

BEAT FREQUENCY

$f_2$

$f_1$

CHIRP

Fig. 6c

Fig. 7

Fig. 9

Fig. 8

52

2-AXIS FINE POSITION ADJUSTMENT

88

LASER OUTPUT

X-ADJUSTMENT

62

EXTERNAL CAVITY

64

Y-ADJUSTMENT

68

70

63
65
66

60

72

74

56

67

78

76

LOCATION OF InGaAsP LASER DIODE

2-AXIS ANGULAR ADJUSTMENT

BEAM EXPANDER INSIDE CAVITY

55

58

Z-ADJUSTMENT

54

InGaAsP-LASER

PZT-CAVITY LENGTH ADJUSTMENT

86

80

84

82

CAVITY MIRROR

2-AXIS ANGULAR ADJUSTMENT CAVITY MIRROR